(19) Europäisches Patentamt / European Patent Office / Office européen des brevets

(11) **EP 4 324 539 A1**

(12) **EUROPEAN PATENT APPLICATION**
published in accordance with Art. 153(4) EPC

(43) Date of publication:
**21.02.2024 Bulletin 2024/08**

(21) Application number: **22788022.6**

(22) Date of filing: **29.03.2022**

(51) International Patent Classification (IPC):
**B01D 19/04** $^{(2006.01)}$    **C08K 3/36** $^{(2006.01)}$
**C08L 83/04** $^{(2006.01)}$

(52) Cooperative Patent Classification (CPC):
**B01D 19/04; C08K 3/36; C08L 83/04**

(86) International application number:
**PCT/JP2022/015343**

(87) International publication number:
**WO 2022/220097 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.04.2021 JP 2021069465**

(71) Applicant: SHIN-ETSU CHEMICAL CO., LTD.
Tokyo 1000005 (JP)

(72) Inventor: SAKURAI Takato
Annaka-shi, Gunma 379-0224 (JP)

(74) Representative: Angerhausen, Christoph
Boehmert & Boehmert
Anwaltspartnerschaft mbB
Pettenkoferstrasse 22
80336 München (DE)

(54) **SILICONE OIL COMPOUND FOR ANTIFOAMING AGENT AND ANTIFOAMING COMPOSITION**

(57) Provided are an oil compound having a favorable initial defoaming property, and an excellent sustained defoaming capability due to a small level of deterioration with time, even in an alkaline foamed liquid in particular; and a defoaming agent composition containing such oil compound. The oil compound is a silicone oil compound (A) for a defoaming agent, which is a crosslink-treated product of:
(a) 100 parts by mass of a hydrophobic organopolysiloxane having a viscosity of 10 to 100,000 mm$^2$/s at 25°C; and
(b) 1 to 15 parts by mass of a fine powder silica, wherein in a particle size distribution of the organopolysiloxane-silica crosslinked product that is measured by single particle optical sizing (SPOS method) after diluting the oil compound with toluene, a median particle size on volumetric basis is 5 to 25 μm.

EP 4 324 539 A1

**Description**

TECHNICAL FIELD

The present invention relates to a silicone oil compound for a defoaming agent in which the particle size of an organopolysiloxane-silica crosslinked product in the oil compound falls into a particular range, and the silicone oil compound itself has an excellent initial defoaming property, particularly an excellent sustained defoaming property and internal addition stability even in an alkaline foamed liquid; and a defoaming agent composition containing such silicone oil compound.

BACKGROUND ART

Silicone-based defoaming agents have a very low surface tension of silicone and are insoluble in many solvents, which makes them superior to other defoaming agents in defoaming capability, and widely applicable to steps involving foaming such as those in the chemical, food, petroleum, papermaking, textile, and pharmaceutical industries. As a silicone-based defoaming agent, there has been generally used an oil compound-type defoaming agent prepared by mixing a silicone oil such as dimethylpolysiloxane, methylphenylpolysiloxane, and methylvinylpolysiloxane; and a fine powder silica.

Moreover, there are also used in general, for example, an emulsion-type defoaming agent with the above oil compound-type defoaming agent being emulsified with a surfactant and dispersed in water; and a self-emulsifying-type defoaming agent prepared by mixing a polyoxyalkylene group-modified organopolysiloxane and an oil compound-type defoaming agent. However, the defoaming capability of these agents largely depends on the oil compound-type defoaming agents as basic raw materials; the conventional art has had a problem of exhibiting an insufficient initial defoaming property, particularly an insufficient sustained defoaming property and internal addition stability in an alkaline foamed liquid.

In order to address these issues, there have been proposed, for example, a defoaming agent composition with an improved alkaline resistance, which is prepared by producing an organopolysiloxane-silica crosslinked product that is obtained by mixing and treating a hydrophobic organopolysiloxane and a fine powder silica under the presence of an alkaline catalyst (Patent document 1: Japanese Patent No.5163909); a defoaming agent composition prepared by proactively introducing an organopolysiloxane-silica crosslinked product by using a terminal alkoxy-modified organopolysiloxane (Patent document 2: Japanese Patent No.6179479; Patent document 3: Japanese Patent No.6197768); a defoaming agent composition containing an organopolysiloxane-silica crosslinked product of an organopolysiloxane, a fine powder silica, and an organopolysiloxane resin composed of $R_3SiO_{1/2}$ units (M units) and $SiO_{4/2}$ units (Q units) (Patent document 4: Japanese Patent No.5922305); and a defoaming agent composition that employs a polyorganosiloxane capable of undergoing an addition reaction via hydrosilylation, and thereby contains a crosslinked product of the organopolysiloxane branched or crosslinked via hydrosilylation and a silica (Patent document 5: Japanese Patent No.5346283). It is known that these defoaming agent compositions using organopolysiloxane-silica crosslinked products can achieve a sustained defoaming property even with regard to strong alkaline foamed liquids such as black liquor and a cutting oil.

PRIOR ART DOCUMENTS

Patent documents

Patent document 1: Japanese Patent No.5163909
Patent document 2: Japanese Patent No. 6179479
Patent document 3: Japanese Patent No.6197768
Patent document 4: Japanese Patent No.5922305
Patent document 5: Japanese Patent No.5346283

SUMMARY OF THE INVENTION

Problems to be solved by the invention

These defoaming agent compositions basically have a high defoaming capability and can achieve an alkaline resistance such as a low degree of deterioration with time even in an alkaline foamed liquid in particular; however, the problems often observed with these compositions are that if the crosslinked product is too large, emulsion stability will deteriorate when the product has been emulsified, or the defoaming property of the composition will rather deteriorate due to an impaired dispersibility. Conversely, if the crosslinked product is too small, there cannot be achieved a target defoaming property and a sustained defoaming property in an alkaline foamed liquid, which may make it impossible to achieve desired performances. In the case of a conventional defoaming agent composition, there exists no evaluation method for assessing the defoaming capability; evaluation had to be carried out whenever it is required, and in the form of performance confirmation performed under actual or similar use conditions, and it was also difficult to control variations in quality even from the perspective of quality management.

Thus, it is an object of the present invention to provide an oil compound having a favorable initial defoaming property, and an excellent sustained defoaming capability due to a small level of deterioration with time, even in an alkaline foamed liquid in particular; and a defoaming agent composition containing such oil compound.

Means to solve the problems

The inventors of the present invention diligently conducted a series of studies to achieve the above object, and completed the invention as follows. That is, the inventors found that in the case of a silicone oil compound for a defoaming agent that contains an organopolysiloxane and a fine powder silica, by adjusting the particle size of an organopolysiloxane-silica crosslinked product of the compound to a size of a particular range, there can be realized both the expression of an initial defoaming property, particularly a sustained defoaming property in an alkaline foamed liquid, and an emulsion stability if the compound is prepared as an emulsion, the particle size being a median particle size on volumetric basis that is obtained by measuring, via single particle optical sizing (SPOS method), the particle size distribution of the organopolysiloxane-silica crosslinked product after the crosslinked product has been diluted with toluene.

Thus, the present invention is to provide the following silicone oil compound for a defoaming agent, and a defoaming agent composition containing this compound.

[1] A silicone oil compound (A) for a defoaming agent, which is a crosslink-treated product of:

(a) 100 parts by mass of a hydrophobic organopolysiloxane having a viscosity of 10 to 100,000 $mm^2/s$ at 25°C; and
(b) 1 to 15 parts by mass of a fine powder silica,

wherein in a particle size distribution of the organopolysiloxane-silica crosslinked product that is measured by single particle optical sizing (SPOS method) after diluting the oil compound with toluene, a median particle size on volumetric basis is 5 to 25 $\mu$m.

[2] The silicone oil compound for a defoaming agent according to [1], wherein the silicone oil compound is a crosslink-treated product of:

the component (a);
the component (b); and
(c) 0.1 to 15 parts by mass of an organopolysiloxane resin composed of $R^1R^2R^3SiO_{1/2}$ units and $SiO_{4/2}$ units, where a molar ratio of $R^1R^2R^3SiO_{1/2}$ units to $SiO_{4/2}$ units is 0.4 to 2.0, and each of $R^1$, $R^2$ and $R^3$ independently represents a substituted or unsubstituted monovalent hydrocarbon group having 1 to 18 carbon atoms.

[3] The silicone oil compound for a defoaming agent according to [1], wherein the silicone oil compound is a crosslink-treated product of:

the component (a);
the component (b); and
(c) 1.0 to 10 parts by mass of an organopolysiloxane resin composed of $R^1R^2R^3SiO_{1/2}$ units and $SiO_{4/2}$ units, where a molar ratio of $R^1R^2R^3SiO_{1/2}$ units to $SiO_{4/2}$ units is 0.6 to 1.0, and each of $R^1$, $R^2$ and $R^3$ independently represents a substituted or unsubstituted monovalent hydrocarbon group having 1 to 18 carbon atoms.

[4] The silicone oil compound for a defoaming agent according to [1], wherein the silicone oil compound is an alkaline catalyst-treated product.
[5] The silicone oil compound for a defoaming agent according to [2] or [3], wherein the silicone oil compound is an alkaline catalyst-treated product.
[6] A self-emulsifying-type defoaming agent composition comprising:

(A) the silicone oil compound for a defoaming agent according to any one of [1] to [5]; and

(B) a polyoxyalkylene group-modified organopolysiloxane.

[7] An emulsion-type defoaming agent composition comprising:

(A) the silicone oil compound for a defoaming agent according to any one of [1] to [5];
(C) a surfactant; and
(E) water.

[8] A method for producing the silicone oil compound for a defoaming agent according to any one of [1] to [5], comprising:

a step of mixing the component (b) into the component (a); and
a step of subjecting the mixture of the components (a) and (b) to a cross-linking treatment by heating the mixture,

wherein in the mixing step, there is provided a dispersing step of dispersing the component (b) into the component (a) to adjust the median particle size of the organopolysiloxane-silica crosslinked product to 5 to 25 $\mu$m.
[9] The method for producing the silicone oil compound for a defoaming agent according to [8], wherein in the mixing step, the dispersing step is performed by carrying out shearing at a circumferential speed of 2.75 to 15.8 m/s using a disperser.
[10] The method for producing the silicone oil compound for a defoaming agent according to [8], wherein in the mixing step, the dispersing step is performed using a kneader in such a manner where the component (b) is to be mixed into an amount of the component (a) that accounts for 1/3 to 1/5 of a compounding amount of the component (a), followed by carrying out solid kneading at 15 to 30 rpm, and then mixing thereinto the remaining part of the compounding amount of the component (a) for dilution.

Effects of the invention

According to the present invention, there can be provided a silicone oil compound for a silicone-based defoaming agent, and a defoaming agent composition, that are capable of realizing both the expression of an initial defoaming property, particularly a sustained defoaming property in an alkaline foamed liquid, and an emulsion stability if the compound is prepared as an emulsion.

MODE FOR CARRYING OUT THE INVENTION

The present invention is described in detail hereunder.

<Component (a): organopolysiloxane>

An organopolysiloxane as a component (a) is hydrophobic. Here, the term "hydrophobic" refers to a state where the organopolysiloxane is hydrophobic as a whole even when containing hydrophilic groups as part of its functional groups.
The hydrophobic organopolysiloxane (a) may be a linear organopolysiloxane, or a branched organopolysiloxane containing $R^4SiO_{3/2}$ (T unit) and/or $SiO_{4/2}$ (Q unit); particularly, it is preferred that the hydrophobic organopolysiloxane (a) be that represented by the following average composition formula (I).

$$R^4{}_nSiO_{(4-n)/2} \qquad (I)$$

In the formula (I), $R^4$ represents a substituted or unsubstituted monovalent hydrocarbon group having 1 to 18 carbon atoms, and $R^4$s may be identical to or different from each other. Specific examples of the monovalent hydrocarbon group represented by $R^4$ include alkyl groups such as a methyl group, an ethyl group, a propyl group, an isopropyl group, a butyl group, an isobutyl group, a pentyl group, a hexyl group, a heptyl group, an octyl group, a nonyl group, a decyl group, a dodecyl group, a tridecyl group, a tetradecyl group, a hexadecyl group, and an octadecyl group; cycloalkyl groups such as a cyclohexyl group; alkenyl groups such as a vinyl group and an allyl group; aryl groups such as a phenyl group and a tolyl group; aralkyl groups such as a styryl group and an $\alpha$-methylstyryl group; or groups such as a chloromethyl group, 3-chloropropyl group, 3,3,3-trifluoropropyl group, cyanoethyl group, 3-aminopropyl group, and N-($\beta$-aminoethyl)-$\gamma$-aminopropyl group, that are obtained by substituting part of or all the carbon atom-bonded hydrogen atoms in any of the abovementioned groups with halogen atoms, cyano group, amino group, hydroxyl group or the like. In terms of defoaming property and economic efficiency, it is preferred that 80% or more, particularly 90% or more of all $R^4$s are methyl groups. Further, n is a positive number satisfying $1.9{\leq}n{\leq}2.2$, preferably $1.95{\leq}n{\leq}2.15$. Here, the end(s) of the organopolysiloxane may be blocked by a triorganosilyl group represented by $R^4_3Si-$, a diorganohydroxysilyl group represented by $(HO)R^4_2Si-$, or an alkoxysilyl group represented by $(R^{17}O)_mR^{18}_{3-m}Si-$ ($R^{17}$ represents a hydrogen atom or a monovalent hydrocarbon group, $R^{18}$ represents a monovalent organic group, m is an integer of 1 to 3.).

In terms of defoaming property and workability, it is preferred that the organopolysiloxane (a) have a viscosity of 10 to 100,000 $mm^2/s$, more preferably 50 to 30,000 $mm^2/s$, when measured by an Ostwald viscometer at 25°C. A silicone oil compound will exhibit a poor defoaming capability if the viscosity of the organopolysiloxane (a) is lower than the above lower limit value, and an impaired workability due to an increased viscosity of the silicone oil compound if the viscosity of the organopolysiloxane (a) is higher than the above upper limit value.

The organopolysiloxane (a) is preferably used at a ratio of 75 to 99.5% by mass, more preferably 80 to 99% by mass, per the total amount of a silicone oil compound (A) for a defoaming agent. If the organopolysiloxane (a) is used in an amount smaller than the above lower limit value, a fine powder silica (b) or an organopolysiloxane resin (c) will be present at a higher ratio, which tends to result in an impaired workability due to an increased viscosity of the silicone oil compound. If the organopolysiloxane (a) is used in an amount larger than the above upper limit value, the fine powder silica (b) or the organopolysiloxane resin (c) will be present at a lower ratio, which tends to result in an impaired defoaming capability.

Preferable examples of the organopolysiloxane (a) represented by the formula (I) include dimethylpolysiloxane, diethylpolysiloxane, methylphenylpolysiloxane, dimethylsiloxane-diphenylsiloxane copolymer, methyl(3,3,3-trifluoropropyl)polysiloxane, and $\alpha,\omega$-dihydroxydimethylpolysiloxane. Any one kind of them may be used alone, or two or more kinds of them may be used in combination.

<Component (b): fine powder silica>

The fine powder silica as the component (b) may be a known fine powder silica; for example, there may be used a wet silica such as a precipitated silica, or a dry silica such as a silica xerogel and a fumed silica. The silicas listed above are all hydrophilic silicas; in the present invention, these hydrophilic silicas may be used as they are, or be turned into hydrophobic silicas by surface-treating them with an organic silyl group-containing compound before use. One kind of fine power silica may be used alone, or two or more kinds thereof may be used in combination.

The fine powder silica may be a commercially available product. For example, there may be listed, by product names, AEROSIL (registered trademark) (by NIPPON AEROSII, CO., LTD.); SIPERNAT (registered trademark) (by Evonik Japan Co., Ltd.); Nipsil (registered trademark) and NIPGEL (registered trademark) (both by Tosoh Silica Corporation); and SYLYSIA (registered trademark) (by FUJI SILYSIA CHEMICAL LTD.). It is preferred that the fine powder silica have a specific surface area of not smaller than 50 $m^2/g$, more preferably 100 to 500 $m^2/g$, even more preferably 150 to 500 $m^2/g$, when measured by BET method. A preferable defoaming capability may not be achieved if the specific surface area is smaller than 50 $m^2/g$.

The particle size of the fine powder silica (b) is preferably 0.75 to 10 $\mu$m, more preferably 1 to 8 $\mu$m, in terms of a median particle size on volumetric basis in a particle size distribution measured by single particle optical sizing (SPOS method). When the particle size is within these ranges, the particle size distribution of an organopolysiloxane-silica crosslinked product shall fall into an appropriate range, whereby a preferable defoaming capability can be easily achieved.

The fine powder silica (b) is used in an amount of 1 to 15 parts by mass, preferably 3 to 10 parts by mass, per 100 parts by mass of the organopolysiloxane (a). If the amount the fine powder silica (b) used is smaller than 1 part by mass, a poor defoaming capability will be exhibited; if the amount the fine powder silica (b) used is larger than 15 parts by mass, an impaired workability will be exhibited due to an increase in viscosity of the silicone oil compound (A).

<Component (c): organopolysiloxane resin>

This organopolysiloxane resin is an optional component having an effect of increasing the crosslinking points of the silicone oil compound (A) for a defoaming agent, and thereby improving a defoaming property, especially a sustained defoaming property to an alkaline foamed liquid. The organopolysiloxane resin is composed of $R^1R^2R^3SiO_{1/2}$ (M) units and $SiO_{4/2}$ (Q) units, where a molar ratio of M units/Q units is preferably 0.4 to 2.0, particularly preferably 0.6 to 1.0.

Here, the expression "composed of $R^1R^2R^3SiO_{1/2}$ (M) units and $SiO_{4/2}$ (Q) units" refers to a state where almost all the units in the organopolysiloxane resin (c) are M units and Q units, and a molar ratio of [M units and Q units]/[other units] is preferably not smaller than 90/10, more preferably not smaller than 95/5.

Each of $R^1$, $R^2$ and $R^3$ in the organopolysiloxane resin (c) independently represents a substituted or unsubstituted monovalent hydrocarbon group having 1 to 18 carbon atoms; in terms of defoaming property and economic efficiency, it is preferred that 80% or more, particularly 90% or more of all of them are methyl groups.

This organopolysiloxane resin may contain hydroxy groups or alkoxy groups by an amount of up to 10%.

It is particularly preferred that the organopolysiloxane resin (c) be that represented by the following average

composition formula (II).

$$R^5{}_nSiO_{(4-n)/2} \qquad \text{(II)}$$

In the formula (II), $R^5$ represents a substituted or unsubstituted monovalent hydrocarbon group having 1 to 18 carbon atoms, and $R^5$s may be identical to or different from each other. Specific examples of the monovalent hydrocarbon group represented by $R^5$ include alkyl groups such as a methyl group, an ethyl group, a propyl group, an isopropyl group, a butyl group, an isobutyl group, a pentyl group, a hexyl group, a heptyl group, an octyl group, a nonyl group, a decyl group, a dodecyl group, a tridecyl group, a tetradecyl group, a hexadecyl group, and an octadecyl group; cycloalkyl groups such as a cyclohexyl group; alkenyl groups such as a vinyl group and an allyl group; aryl groups such as a phenyl group and a tolyl group; aralkyl groups such as a styryl group and an $\alpha$-methylstyryl group; or groups such as a chloromethyl group, 3-chloropropyl group, 3,3,3-trifluoropropyl group, cyanoethyl group, 3-aminopropyl group, and N-($\beta$-aminoethyl)-$\gamma$-aminopropyl group, that are obtained by substituting part of or all the carbon atom-bonded hydrogen atoms in any of the abovementioned groups with halogen atoms, cyano group, amino group, hydroxyl group or the like. In terms of defoaming property and economic efficiency, it is preferred that 80% or more, particularly 90% or more of all $R^5$s are methyl groups. Further, n is a positive number satisfying $2.0 \leq n \leq 3.2$, preferably $2.5 \leq n \leq 2.9$.

The organopolysiloxane resin (c) is preferably used in an amount of 0.1 to 15 parts by mass, more preferably 0.5 to 15 parts by mass, particularly preferably 1.0 to 10 parts by mass, per 100 parts by mass of the organopolysiloxane (a). If the organopolysiloxane resin (c) is added in an amount of smaller than 0.1 parts by mass, there cannot be achieved the effect of improving the sustained defoaming property to an alkaline foamed liquid; if the organopolysiloxane resin (c) is added in an amount of larger than 15 parts by mass, workability may be impaired due to an extremely high viscosity of the oil compound for a defoaming agent.

Here, an organopolysiloxane-silica crosslinked product and the particle size distribution thereof are described.

The silicone oil compound (A) of the present invention for a defoaming agent is a crosslink-treated product of the organopolysiloxane (a) and the fine powder silica (b), and thus contains an organopolysiloxane-silica crosslinked product. Further, if using the organopolysiloxane resin (c), the silicone oil compound (A) is a crosslink-treated product of the components (a), (b) and (c), and contains an organopolysiloxane-silica crosslinked product of these components.

The mechanism by which a defoaming agent functions can be described as such that a defoaming agent component exists in an insoluble manner with respect to a foamed liquid, in which this defoaming agent component then enters the foam film and expands due to its lower interfacial tension than the foamed liquid, whereby the foam film will be damaged as a result of being teared, and foam breakage will thus occur starting therefrom. Here, as a defoaming agent component, an organopolysiloxane has excellent characteristics which are its insolubility to various solvents such as water, and its low interfacial tension; however, an organopolysiloxane has a shortcoming where under an extreme pH condition, particularly when in an alkaline condition, the siloxane bonds (-O-Si-O) will break easily whereby insolubility will be lost as the organopolysiloxane progressively decomposes, which will cause the defoaming property to deteriorate with time. In this regard, there has been employed, for example, a method of remedying deterioration in defoaming property with time by further increasing the polymerization degree of an organopolysiloxane; however, an extremely high viscosity will be exhibited if the polymerization degree is increased too high, which puts a limitation on workability. Thus, by introducing crosslinking points such as R' $SiO_{3/2}$ (T) units and $SiO_{4/2}$ (Q) units, or the organopolysiloxane resin (c) composed of the $R^1R^2R^3SiO_{1/2}$ (M) units and $SiO_{4/2}$ (Q) units into an organopolysiloxane, the insolubility of the organopolysiloxane can be improved while restricting increase in viscosity to some extent.

Further, in the present invention, the fine powder silica (b) is used whereby an organopolysiloxane-silica crosslinked product will be generated as the fine powder silica and organopolysiloxane chemically bind together, which not only improves the insolubility to a solvent when used as a defoaming agent, but also dramatically improves the defoaming property by entering the foam film.

However, the problem with introducing the crosslinking points and thereby generating an organopolysiloxane-silica crosslinked product in the above manner is that if the size thereof is too large, and if the compound is thus turned into that of a self-emulsifying type or an emulsion type, an impaired emulsion stability will be exhibited due to the coarse particles, which will lead to separation of the emulsion or deterioration in dispersibility, whereby the defoaming property itself will deteriorate as well. In view of such problem, there has not yet been found a useful analytical method regarding an evaluation method of an organopolysiloxane-silica crosslinked product for achieving both a defoaming property and emulsion stability of a silicone oil compound for a defoaming agent; analysis can now only be conducted by making assumptions based on an emulsion stability and defoaming property when the compound has actually been turned into an emulsion.

As a method for solving this problem, the present invention has found that it is suitable to use a particle number counting-type measurement method for detecting an organopolysiloxane-silica crosslinked product diluted with toluene, via single particle optical sizing (SPOS method), with regard to the silicone oil compound (A) for a defoaming agent as a crosslink-treated product of the organopolysiloxane (a) and the fine powder silica (b). That is, by adjusting the particle size distribution of the organopolysiloxane-silica crosslinked product to a particle size of 5 to 25 μm, preferably 5 to 23 μm, more preferably 5 to 20 μm, in terms of a median particle size on volumetric basis, there can be concurrently achieved an emulsion stability when the compound has been prepared as an emulsion, while allowing there to be expressed an initial defoaming property, particularly a sustained defoaming property in an alkaline foamed liquid. If such particle size is smaller than the above lower limit value, a higher dispersibility will be observed, which runs counter to a condition where a defoaming agent component should exist in an insoluble manner to a foamed liquid in order for the defoaming property of a defoaming agent to be expressed, whereby the defoaming property will be impaired, or deterioration with time in an alkaline foamed liquid is more likely. When the particle size is larger than the above upper limit value, if the compound is turned into that of a self-emulsifying type or an emulsion type, an impaired emulsion stability will be exhibited due to the coarse particles, which will lead to separation of the emulsion or deterioration in dispersibility, whereby the defoaming property itself will deteriorate as well.

In contrast, unlike the particle number counting-type, in the cases of particle size distributions calculated using scattered laser lights, such as those obtained by other particle distribution measurement methods including, for example, a photon correlation method (dynamic light scattering method, DLS) and a laser diffraction/scattering method (static light scattering method, SLS), the particle size distribution of the organopolysiloxane-silica crosslinked product cannot be obtained during the calculation process, whereas only the particle size distribution of the silica alone is obtained, which made it impossible to recognize a correlation between the particle size distribution of the silicone oil compound for a defoaming agent and the emulsion stability and sustained defoaming property when the compound has been turned into an emulsion.

<Preparation of silicone oil compound (A) for defoaming agent>

Preparation of the silicone oil compound (A) of the present invention for a defoaming agent is such that the compound can, for example, be produced as a crosslink-treated product by mixing the organopolysiloxane (a) and the fine powder silica (b), heating the mixture at a temperature of not lower than 80°C, particularly a temperature of 80 to 200°C, and then performing neutralization and/or removing low-boiling-point fractions as appropriate. If adding the organopolysiloxane resin (c), the compound can, for example, be produced as a crosslink-treated product by mixing the organopolysiloxane (a) and the organopolysiloxane resin (c), distilling away the solvent content while mixing them at 150°C for 2 hours under a reduced pressure of 10 mmHg or lower, turning the mixed product back to room temperature, mixing the fine powder silica (b) thereinto, heating the mixture at a temperature of not lower than 80°C, particularly a temperature of 80 to 200°C, and then performing neutralization and/or removing low-boiling-point fractions as appropriate. There may be further added to this silicone oil compound, for example, an inorganic ammonium salt, organic silicon compound, siloxane resin, and alkaline catalyst that are disclosed in, for example, Japanese Examined Patent Application Publication No.Hei 4-42043, Japanese Unexamined Patent Application Publication No.Hei 5-261206, and Japanese Unexamined Patent Application Publication No.2005-324140, for the purposes of improving, for example, the sustained defoaming property, high-temperature property, dilution stability and alkali resistance of the defoaming agent. The silicone oil compound (A) of the present invention for a defoaming agent is a crosslink-treated product of, for example, the organopolysiloxane (a) and the fine powder silica (b), or the components (a) and (b) and the organopolysiloxane resin (c); it is preferred that this crosslink-treated product be an alkaline catalyst-treated product. If adding an alkaline catalyst, a neutralization reaction may be performed as appropriate by adding a neutralizer after carrying out the above treatment, and a neutralized salt or the like may also be removed via a filtration step.

The adjustment of making the particular median particle size range of the organopolysiloxane-silica crosslinked product fall into the range of the present invention can, for example, be carried out by previously and strongly dispersing the organopolysiloxane (a) and the fine powder silica (b) having a particular median particle size range at the time of mixing them, using a disperser or a kneader.

A preferable method for producing the silicone oil compound of the present invention for a defoaming agent has a step of mixing the component (b) into the component (a), and a step of subjecting the mixture thereof to a crosslinking treatment by heating the same, where in the mixing step, there is provided a dispersing step of dispersing the component (b) into the component (a) to adjust the median particle size of the organopolysiloxane-silica crosslinked product to 5 to 25 μm.

In the mixing step, in order to make the median particle size of the organopolysiloxane-silica crosslinked product fall into the given range, it is preferred that the dispersing step be performed by carrying out shearing at a circumferential speed of 2.75 to 15.8 m/s using a disperser. Here, the circumferential speed is calculated by the following formula.

$$\nu = (N/60) \cdot \pi D$$

ν: Circumferential speed (m/s), N: Rotation number (rpm), D: Blade diameter (m)

Alternatively, using a kneader, it is preferred that the dispersing step be performed in such a manner where the component (b) is to be mixed into an amount of the component (a) that accounts for 1/3 to 1/5 of a compounding amount of the component (a), followed by carrying out solid kneading at 15 to 30 rpm, and then mixing thereinto the remaining part of the compounding amount of the component (a) for dilution.

Here, the treating time is preferably 10 min to 5 hours, particularly preferably 1 to 3 hours. Further, it is preferred that the treatment be performed under an inert atmosphere such as a nitrogen atmosphere.

As the alkaline catalyst, there may be listed, for example, oxides, hydroxides, alkoxides or siliconates of alkali metals or alkali earth metals, and a TMAH (tetramethylammonium hydroxide) siliconate catalyst, which are known alkaline catalysts used for rearrangement reaction of polysiloxanes, of which preferred are potassium siliconate and potassium hydroxide.

The alkaline catalyst is used in an amount of 0.001 to 5 parts by mass, preferably 0.01 to 3 parts by mass, more preferably 0.05 to 2 parts by mass, per 100 parts by mass of the organopolysiloxane (a). If the amount of the alkaline catalyst used is smaller than 0.001 parts by mass, a weak catalytic effect may be observed; even an amount greater than 5 parts by mass shall not result in a significant improvement in catalytic effect, whereby a disadvantage may occur in terms of cost efficiency.

When producing the silicone oil compound of the present invention for a defoaming agent, as a kneading machine used to perform kneading, there may be listed, for example, a gate mixer, a kneader, a pressurizing kneader, a biaxial kneader, and an intensive mixer; however, there are no particular limitations imposed on the kneading machine used. These kneading machines may be used in any steps such as the step of mixing the components (a) and (b), the step of surface-treating the silica, or even the subsequent neutralization step.

<Defoaming agent composition>

The silicone oil compound (A) for a defoaming agent, which is obtained by the above step(s), can be either used as it is, or used in the form of a defoaming agent composition containing such silicone oil compound. Specifically, it may be used in the form of a defoaming agent composition containing the silicone oil compound; and a polyoxyalkylene group-modified organopolysiloxane (B), a surfactant (C) and/or a polyoxyalkylene polymer (D), as emulsifiers or auxiliary emulsifying agents. More specifically, the silicone oil compound (A) may be used in the form of a self-emulsifying-type defoaming agent composition when used in combination with the polyoxyalkylene group-modified organopolysiloxane (B); an emulsion-type defoaming agent composition that contains water (E) and is obtained by a known emulsifying technique; or a solution-type defoaming agent composition with the silicone oil compound being dispersed in a proper solvent.

The polyoxyalkylene group-modified organopolysiloxane (B) may, for example, be one represented by the following general formula (III).

$$R^6{}_2R^7SiO\text{-}(R^6{}_2SiO)_x\text{-}(R^6R^7SiO)_y\text{-}SiR^6{}_2R^8 \qquad (III)$$

In the formula (III), $R^6$s each represent an identical or different substituted or unsubstituted monovalent hydrocarbon group having 1 to 18 carbon atoms, specific examples of which may include alkyl groups such as a methyl group, an ethyl group, a propyl group, an isopropyl group, a butyl group, an isobutyl group, a pentyl group, a hexyl group, a heptyl group, an octyl group, a nonyl group, a decyl group, a dodecyl group, a tridecyl group, a tetradecyl group, a hexadecyl group, and an octadecyl group; cycloalkyl groups such as a cyclohexyl group; alkenyl groups such as a vinyl group and an allyl group; aryl groups such as a phenyl group and a tolyl group; aralkyl groups such as a styryl group and an α-methylstyryl group; or monovalent hydrocarbon groups such as a chloromethyl group, 3-chloropropyl group, 3,3,3-trifluoropropyl group, cyanoethyl group, 3-aminopropyl group, and N-(β-aminoethyl)-γ-aminopropyl group, that are obtained by substituting part of or all the carbon atom-bonded hydrogen atoms in any of the abovementioned groups with halogen atoms, cyano group, amino group or the like.

In the formula (III), $R^7$ represents a polyoxyalkylene group expressed by the following general formula (IV).

$$\text{-}R^9\text{-}O(CH_2CH_2O)_a\text{-}(CH_2(CH_3)CHO)_b\text{-}R^{10} \qquad (IV)$$

In the formula (IV), $R^9$ represents a divalent hydrocarbon group having 2 to 6 carbon atoms, such as an alkylene group and an alkenylene group, examples of which may include an ethylene group, a propylene group, a trimethylene group, a butylene group, a pentylene group, and a hexylene group. Further, $R^{10}$ represents a hydrogen atom, an alkyl group having 1 to 6 carbon atoms, an acetyl group, or an isocyanate group; examples of such alkyl group include a methyl group, an ethyl group, a propyl group, a butyl group, and a pentyl group. a and b are positive numbers satisfying $3 \leq a+b \leq 80$, preferably $5 \leq a+b \leq 60$, and a/b=2/8 to 8/2, preferably a/b=2.5/7.5 to 7.5/2.5.

In the formula (III), $R^8$ is a group similar to those represented by $R^6$ or $R^7$, a hydroxyl group, or an alkoxy group having 1 to 6 carbon atoms, specific examples of which may include groups that are listed as the examples of $R^6$ and $R^7$, and alkoxy groups such as a methoxy group, an ethoxy group, a propoxy group, and a butoxy group.

In the formula (III), x is an integer of 5 to 200, preferably 20 to 150, and y is an integer of 1 to 30, preferably 1 to 20.

One kind of the polyoxyalkylene group-modified organopolysiloxane (B) may be used alone, or there may be used a mixture of two or more kinds thereof. The polyoxyalkylene group-modified organopolysiloxane is preferably one having a viscosity of 10 to 10,000 $mm^2/s$, more preferably 50 to 8,000 $mm^2/s$, even more preferably 500 to 5,000 $mm^2/s$, when measured by an Ostwald viscometer at 25°C.

Specific examples of the polyoxyalkylene group-modified organopolysiloxane (B) include, but are not limited to those shown below.

[Chemical formulae 1]

$$(CH_3)_3SiO-[(CH_3)_2SiO]_{30}-[(CH_3)R'SiO]_5-Si(CH_3)_3$$

$$R':-C_3H_6O-(C_2H_4O)_{30}-(CH_2(CH_3)CHO)_{10}-C_4H_3 \quad (CH_3)_3SiO-[(CH_3)_2SiO]_{30}-[(CH_3)R'SiO]_3-Si(CH_3)_3$$

$$R':-C_3H_8O-(C_2H_4O)_{20}-(CH_2(CH_3)CHO)_{20}-C_4H_9 \quad (CH_3)_3SiO-[(CH_3)_2SiO]_{40}-[(CH_3)R'SiO]_4-Si(CH_3)_3$$

$$R':-C_3H_6O-(C_2H_4O)_{21}-(CH_2(CH_3)CHO)_7-COCH_3 \quad (CH_3)_3SiO-C(CH_3)_2SiO]_{50}-[(CH_3)R''SiO]_6-[(CH_3)$$

$$R'''SiO]_1-Si(CH_3)_3$$

$$R'':-C_3H_6O-(C_2H_4O)_{32}-(CH_2(CH_3)CHO)_8-C_4H_9$$

$$R''':-C_{12}H_{25} \quad (CH_3)_3SiO-[(CH_3)_2SiO]_{135}-[(CH_3)R'SiO]_{15}-Si(CH_3)_3$$

$$R'.-C_3H_6O-(C_2H_4O)_{21}-(CH_2(CH_3)CHO)_{21}-CH_3 \quad (CH_3)aSiO-[(CH_3)_2SiO]_{30}-[(CH_3)R'5iO]_5-Si(CH_3)_3$$

$$R':-C_3H_6O-(C_2H_4O)_{25.5}- \quad (CH_2(CH_3)CHO)_{8.5}-C_4H_9 \quad (CH_3)_3SiO-[(CH_3)_2SiO]_{27}--[(CH_3)R'5iO]_3-Si(CH_3)_3$$

$$R':-C_3H_6O-(C_2H_4O)_{23}-(CH_2(CH_3)CHO)_{23}-C_4H_9$$

As the surfactant (C), there may be listed a non-ionic surfactant, an anionic surfactant, a cationic surfactant, and an ampholytic surfactant.

(C-1) Non-ionic surfactant

Examples of a non-ionic surfactant include an ethylene oxide-, propylene oxide- or butylene oxide-added polyoxyalkylene alkylether or polyoxyalkylene alkenyl ether containing a linear or branched alkyl or alkenyl group having 10 to 24 carbon atoms on average; a glycerin ester of a fatty acid having 8 to 20 carbon atoms; a glycol ester of a fatty acid having 8 to 20 carbon atoms; an alkylene oxide adduct of a monoglyceride of a fatty acid having 8 to 20 carbon atoms; a sucrose ester of a fatty acid having 8 to 20 carbon atoms; a sorbitan ester of a fatty acid having 8 to 20 carbon atoms; polyglycerin fatty acid ester containing an acyl group having 8 to 20 carbon atoms; a monoethanolamide or diethanolamide of a fatty acid having 8 to 20 carbon atoms, or ethoxylates thereof; a polyoxyethylene hardened castor oil; a polyoxyalkylene sorbitan fatty acid ester containing an acyl group having 8 to 20 carbon atoms; a polyoxyethylene sorbit fatty acid ester containing an acyl group having 8 to 20 carbon atoms; an alkyl saccharide-based surfactant containing a linear or branched alkyl, alkenyl or alkylphenyl group having 8 to 18 carbon atoms; an alkylamine oxide or alkylamideamine oxide containing a linear or branched alkyl or alkenyl group having 8 to 20 carbon atoms; an ether compound or ester compound of a polyhydric alcohol containing a linear or branched alkyl or alkenyl group having 8 to 20 carbon atoms; a polyoxyalkylene-modified organopolysiloxane; a polyoxyalkylene-alkyl co-modified organopolysiloxane; a polyglycerin-modified organopolysiloxane; a polyglycerin-alkyl co-modified organopolysiloxane; a polyoxyalkylene-fluoroalkyl co-modified organopolysiloxane; a crosslinkable polyoxyalkylene-organopolysiloxane; a sugar-modified silicone; an oxazoline-modified silicone; a polyoxyalkylene alkylaryl ether; a polyoxyalkylene lanolin alcohol; a polyoxyalkylene fatty acid ester; a Pluronic-type block polymer; a Tetronic-type block polymer; a polyoxyalkylene fatty acid amide; a polyoxyalkylene alkyl amide; and polyethyleneimine derivatives. Any one kind of them may be used alone, or two or more kinds of them may be used in combination.

(C-2) Anionic surfactant

Examples of an anionic surfactant include alkyl benzene sulfonates; alkyl ether sulfates or alkenyl ether sulfates; alkyl sulfates or alkenyl sulfates; olefin sulfonates; alkane sulfonates; higher fatty acid salts; (amide)ether carboxylic acid-type surfactants; α-sulfofatty acid salts or esters; N-acyl amino acid type surfactants; phosphate ester-type surfactants; sulfosuccinic acid ester-type surfactants; polyoxyalkylene fatty acid amide ether sulfates; monoglyceride sulfate ester salts; acylated isethionate; alkyl glyceryl ether sulfate or alkyl glyceryl ether sulfonate; alkyl or alkenyl amide sulfonate; alkanol amide sulfosuccinate; alkyl sulfoacetate; acylated taurate; and N-acyl-N-carboxyethylglycinate. Any one kind of them may be used alone, or two or more kinds of them may be used in combination.

As salts of these anionic surfactants i.e. counterions of anionic residues, there may be listed, for example, alkali metal ions such as sodium and potassium ions; alkali earth metal ions such as calcium and magnesium ions; ammonium ions; and an alkanolamine containing 1 to 3 alkanol groups having 2 or 3 carbon atoms (e.g. monoethanolamine, diethanolamine, triethanolamine, and triisopropanolamine). Any one kind of them may be used alone, or two or more kinds of them may be used in combination.

(C-3) Cationic surfactant

Examples of a cationic surfactant include a tertiary amine, a quaternary ammonium salt, amido amine, and ester amine. For example, there may be listed behenyltrimethylammonium chloride, distearyldimethylammonium chloride, cetyltrimethylammonium chloride, stearyltrimethylammonium chloride, lauryltrimethylammonium chloride, N-stearyl-N,N,N-tri(polyoxyethylene)ammonium chloride (3 moles of ethylene oxide added in total), cetylbenzyldimethylammonium chloride, cetyltriethylammonium bromide, distearyldimethylammonium chloride, 2-decyltetradecyltrimethylammonium chloride, 2-dodecylhexadecyltrimethylammonium chloride, di-2-hexyldecyldimethylammonium chloride, di-2-octyldodecyldimethylammonium chloride, behenyl tertiary amine, stearyl tertiary amine, and stearamidopropyl dimethylamine. Any one kind of them may be used alone, or two or more kinds of them may be used in combination.

(C-4) Ampholytic surfactant

As an ampholytic surfactant, there may be listed, for example, those of amido amino acid type, carbobetaine type, amidobetaine type, sulfobetaine type, amidosulfobetaine type, imidazolinium betaine type, amino acid type, phosphobetaine type, and phosphate ester type. Any one kind of them may be used alone, or two or more kinds of them may be used in combination.

As the polyoxyalkylene polymer (D), there may be listed, for example, those expressed by the following formulae.
[Chemical formulae 2]

$$HO-[CH_2(CH_3)CHO]_{35}-H$$

$$HO-[CH_2(CH_3)CHO]_{70}-H$$

$$HO-(CH_2CH_2O)_4-[CH_2(CH_3)CHO]_{30}-H$$

$$HO-(C_2H_4O)_{25}-(C_3H_6O)_{35}-H \quad HO-(C_3H_6O)_{30}-H$$

$$CH_2-CHCH_2O-(CH_2CH_2O)_{32}-[CH_2(CH_3)CHO]_8-H$$

$$CH_2=CHCH_2O-(CH_2CH_2O)_{22}-[CH_2(CH_3)CHO]_{22}-C_4H_9$$

$$CH_2=CHCH_2O-(CH_2CH_2O)_{10}-CH_3$$

Here, the composition formulae shown above merely serve as examples, and thus shall not limit the present invention.

(Self-emulsifying-type defoaming agent composition)

The self-emulsifying-type defoaming agent composition contains the silicone oil compound (A) for a defoaming agent, and the polyoxyalkylene group-modified organopolysiloxane (B).
If necessary, the self-emulsifying-type defoaming agent composition may also contain the abovementioned surfactant (C) and/or polyoxyalkylene polymer (D).

Further, if preparing the self-emulsifying-type defoaming agent composition, it is preferred that the silicone oil compound (A) for a defoaming agent be contained in an amount of 5 to 80% by mass, more preferably 10 to 70% by mass, even more preferably 20 to 60% by mass, with respect to the whole defoaming agent composition. If the silicone oil compound is contained in an excessively small amount, there may be exhibited a poor defoaming capability in terms of a defoaming agent composition; if the amount of the silicone oil compound contained is excessively large, the main purpose of a self-emulsifying-type defoaming agent composition which is to improve the dispersibility of the oil compound component may not be satisfied.

Further, in the self-emulsifying-type defoaming agent composition, it is preferred that the polyoxyalkylene group-modified organopolysiloxane (B) be used in an amount of not smaller than 20% by mass, more preferably not smaller than 30% by mass, even more preferably not smaller than 40% by mass, with respect to the whole defoaming agent composition.

In the self-emulsifying-type defoaming agent composition, if adding the polyoxyalkylene polymer (D) and a non-ionic surfactant, it is preferred that they are added in an amount of 0 to 60% by mass, particularly preferably 0 to 40% by mass, with respect to the whole defoaming agent composition.

(Emulsion-type defoaming agent composition)

The emulsion-type defoaming agent composition contains the silicone oil compound (A) for a defoaming agent, the surfactant (C), and water (E). The emulsion-type defoaming agent composition may be produced by a known emulsifying technique. As the emulsifier or auxiliary emulsifying agent for emulsifying the silicone oil compound (A) for a defoaming agent, other than the surfactant (C), there may be used, for example, the polyoxyalkylene group-modified organopolysiloxane (B) and the polyoxyalkylene polymer (D).

In the emulsion-type defoaming agent composition, the surfactant (C) is used to disperse the silicone oil compound (A) in water (E); there may be used one kind of the surfactant (C) alone, or a mixture of two or more kinds thereof. It is preferred that the surfactant (C) be contained in an amount of not larger than 20% by mass, more preferably 1 to 10% by mass, with respect to the whole defoaming agent composition. An amount larger than 20% by mass will result in a higher viscosity of the defoaming agent composition, which may lead to a poor workability.

In the emulsion-type defoaming agent composition, there may be used one kind of the polyoxyalkylene group-modified organopolysiloxane (B) alone, or a mixture of two or more kinds thereof. It is preferred that the polyoxyalkylene group-modified organopolysiloxane (B) be contained in an amount of 0 to 30% by mass, more preferably 1 to 20% by mass, with respect to the whole defoaming agent composition. A contained amount larger than 30% by mass may lead to a poor defoaming capability of the composition.

Further, in the emulsion-type defoaming agent composition, the polyoxyalkylene polymer (D) serves as an auxiliary emulsifying agent; there may be used one kind of the polyoxyalkylene polymer (D) alone, or a mixture of two or more kinds thereof. It is preferred that the polyoxyalkylene polymer (D) be contained in an amount of 0 to 40% by mass, more preferably 0 to 20% by mass, with respect to the whole defoaming agent composition. A contained amount larger than 40% by mass may lead to a poor emulsification property of the composition. Here, if added, the polyoxyalkylene polymer (D) may be added in an effective amount, preferably an amount of not smaller than 5% by mass.

In the emulsion-type defoaming agent composition, a total amount of the emulsifiers or auxiliary emulsifying agents such as the polyoxyalkylene group-modified organopolysiloxane (B), the polyoxyalkylene polymer (D) and the surfactant (C) is preferably 1 to 40% by mass, more preferably 2 to 20% by mass, with respect to the whole defoaming agent composition.

Further, if preparing the emulsion-type defoaming agent composition, it is preferred that the silicone oil compound (A) for a defoaming agent be contained in an amount of 5 to 50% by mass, more preferably 5 to 40% by mass, particularly preferably 5 to 30% by mass, with respect to the whole remainder other than water (E) in the defoaming agent composition. If the silicone oil compound is contained in an excessively small amount, there may be exhibited a poor defoaming capability in terms of a defoaming agent composition; an excessively large amount of the silicone oil compound will result in a higher viscosity of the defoaming agent composition, which may lead to a poor workability.

In the emulsion-type defoaming agent composition, water (E) needs to be added to emulsify the components such as the silicone oil compound (A) for a defoaming agent, the surfactant (C), the polyoxyalkylene group-modified organopolysiloxane (B), and the polyoxyalkylene polymer (D). The amount of water (E) is a remainder with respect to a sum total of contained ratios of these components; water (E) is preferably added in an amount of 50 to 2,000 parts by mass, more preferably 80 to 400 parts by mass, per a total of 100 parts by mass of these components.

Here, the emulsion-type defoaming agent composition may be prepared by mixing given amounts of the components other than water, and stirring and emulsifying them by a known method such as one employing a mixing/dispersing machine including a homomixer, a homogenizer, a colloid mill or the like while performing heating if necessary. Particularly preferred is a method where the composition is prepared by uniformly mixing and dispersing given amounts of the components other than water, adding part of water thereto to perform stirring and emulsification, and then adding the remaining part of water thereto to perform stirring and mixing uniformly.

Further, a small amount of preservative or bactericide may be optionally added to the emulsion-type defoaming agent composition for preservation purpose; a small amount of viscosity improver may be optionally added to the composition to increase viscosity and achieve emulsion stability; and other optional components may also be added to the composition as well.

Specific examples of the preservative or bactericide include sodium hypochlorite, sorbic acid, potassium sorbate, salicylic acid, sodium salicylate, benzoic acid, sodium benzoate, parabens, and an isothiazoline compound. It is preferred that the preservative or bactericide be added in an amount of 0 to 0.5% by mass, particularly preferably 0.005 to 0.5% by mass, with respect to the whole emulsion-type defoaming agent composition.

Specific examples of the viscosity improver include polyacrylic acid, sodium polyacrylate, an acrylic acid-methacrylic acid copolymer, sodium carboxymethylcellulose, methylcellulose, hydroxypropylmethylcellulose, hydroxyethylmethylcellulose, xanthan gum, and guar gum. It is preferred that the viscosity improver be added in an amount of 0 to 1.0% by mass, particularly preferably 0.01 to 0.5% by mass, with respect to the whole emulsion-type defoaming agent composition.

(Solution-type defoaming agent composition)

The solution-type defoaming agent composition is one with the silicone oil compound (A) for a defoaming agent being dispersed in a proper solvent. It is preferred that the silicone oil compound (A) for a defoaming agent be contained in the solution-type defoaming agent composition by an amount of 5 to 80% by mass, more preferably 30 to 70% by mass, with respect to the whole defoaming agent composition. If the silicone oil compound is contained in an excessively small amount, there may be exhibited a poor defoaming capability in terms of a defoaming agent composition; if the amount of the silicone oil compound contained is excessively large, the main purpose of a solution-type defoaming agent composition which is to improve the dispersibility of the oil compound component may not be satisfied.

Further, as a solvent used in the solution-type defoaming agent composition, there may be listed solvents capable of dissolving the hydrophobic organopolysiloxane as the component (a), such as toluene, xylene, hexane, chloroform, 2-butanone, and 4-methyl-2-pentanone. Any one kind of them may be used alone, or two or more kinds of them may be used in combination.

WORKING EXAMPLES

The present invention is described in detail hereunder with reference to working and comparative examples; however, the present invention shall not be limited to the following working examples. Here, in the examples described below, viscosity refers to a value measured by an Ostwald viscometer at 25°C.

[Component details]

(a) Organopolysiloxane

(a-1) Dimethylpolysiloxane having a viscosity of 10,000 $mm^2/s$ [KF96 (10,000 cs) by Shin-Etsu Chemical Co., Ltd.], as a hydrophobic organopolysiloxane.
(a-2) Dimethylpolysiloxane having a viscosity of 1,000 $mm^2/s$ [KF96 (1,000 cs) by Shin-Etsu Chemical Co., Ltd.], as a hydrophobic organopolysiloxane.
(a-3) Branched dimethylpolysiloxane having a viscosity of 8,000 $mm^2/s$ and 0.01 mole fraction of $CH_3SiO_{3/2}$ units, as a hydrophobic organopolysiloxane.

(b) Fine powder silica

(b-1) Hydrophobic silica prepared by surface-treating AEROSII,300 [by Nippon Aerosil Co., Ltd., specific surface area 300 $m^2/g$ by BET method, median particle size on volumetric basis 3.3 $\mu m$ when measured by SPOS method] with hexamethyldisilazane.
(b-2) SIPERNAT D10 [Evonik Japan Co., Ltd., median particle size on volumetric basis 5.5 $\mu m$ when measured by SPOS method]

(c) Organopolysiloxane resin

(c-1) 60% toluene solution of an organopolysiloxane composed of $Me_3SiO_{1/2}$ units and $SiO_{4/2}$ units, where $Me_3SiO_{1/2}$ units/$SiO_{4/2}$ units=0.74 (solution viscosity: 10.4 mm2/s).
(c-2) 70% toluene solution of an organopolysiloxane composed of $Me_3SiO_{1/2}$ units and $SiO_{4/2}$ units, where $Me_3SiO_{1/2}$ units/$SiO_{4/2}$ units=1.17 (solution viscosity: 23.1 mm2/s).
(c-3) 70% toluene solution of an organopolysiloxane composed of $Me_3SiO_{1/2}$ units and $SiO_{4/2}$ units, where $Me_3SiO_{1/2}$ units/$SiO_{4/2}$ units=1.30 (solution viscosity: 12.6 mm2/s).

(B) Polyoxyalkylene group-modified organopolysiloxane

(B-1) Polyoxyalkylene-modified organopolysiloxane whose average composition is expressed by the following formula (V), and having a viscosity of 1,640 mm2/s

$$R^{11}_2R^{12}SiO\text{-}(R^{11}_2SiO)_m\text{-}(R^{12}R^{13}SiO)_n\text{-}SiR^{11}_2R^{12} \qquad (V)$$

(In this formula, $R^{11}$ and $R^{12}$ represent $-CH_3$; $R^{13}$ represents $- C_3H_6O(CH_2CH_2O)_{23}(CH_2CH(CH_3)O)_{23}C_4H_9$; m is 27; n is 3.)

(B-2) Polyoxyalkylene-modified organopolysiloxane whose average composition is expressed by the following formula (VI), and having a viscosity of 1,100 mm2/s

$$R^{14}_2R^{15}SiO\text{-}(R^{14}_2SiO)_x\text{-}(R^{14}R^{16}SiO)_y\text{-}SiR^{14}_2R^{15} \qquad (VI)$$

(In this formula, $R^{14}$ represents $-CH_3$; $R^{15}$ represents $-C_{13}H_{27}$; $R^{16}$ represents $- C_3H_6O(C_2H_4O)_6(C_3H_6O)_{24}CH_3$; x is 80; y is 2)

(C) Surfactant

(C-1) Sorbitan monostearate
(C-2) Polyethylene glycol monostearate (number of moles of EO added 50)

(D) Polyoxyalkylene polymer whose average composition is expressed by the following formula (VII)

$$HO\text{-}(C_3H_6O)_{35}\text{-}H \qquad (VII)$$

(E) Water

[Working examples 1 to 8]

(A) Preparation of silicone oil compound

The organopolysiloxane (a) and the fine powder silica (b) were mixed at the compounding ratios show in Table 1, and kneaded at 150°C for 3 hours under a nitrogen gas atmosphere using a gate mixer, where as an alkaline catalyst, there was employed 1 part by mass of a potassium siliconate containing 3% by mass of potassium hydroxide. After being cooled to 100°C or lower, the kneaded product was then neutralized with 2-chloroethanol, followed by removing low-boiling-point fractions to obtain the silicone oil compound (A).
In order to adjust the median particle size of the organopolysiloxane-silica crosslinked product, before the heating treatment, a disperser as a kneading machine (device name: LABOLUTION by PRIMIX Corporation) was used to perform mixing at a blade diameter of φ 35 to 55 mm and a rotation number of 1,500 to 5,500 rpm (circumferential speed 2.75 to 15.8 m/s) so as to promote the dispersion of the component (b) in the component (a). Alternatively, a kneader (by SATAKE MultiMix Corporation) was used as a kneading machine, where the component (b) was mixed into an amount of the component (a) that accounts for 1/3 to 1/5 of the compounding amount of the component (a), followed by carrying out solid kneading at 15 to 30 rpm, and then mixing thereinto the remaining part of the compounding amount of the component (a) for dilution, thereby promoting the dispersion of the component (b) into the component (a).

Further, if adding the organopolysiloxane (c), the organopolysiloxane (a) and the organopolysiloxane resin (c) as a solid content were mixed at the compounding ratios shown in Table 1, followed by distilling away the solvent content while mixing them at 150°C for 2 hours under a reduced pressure of 10 mmHg or lower, turning the mixed product back to room temperature, and then using a gate mixer to perform kneading at 150°C for 3 hours under a nitrogen gas atmosphere where there were used the fine powder silica (b) and, as an alkaline catalyst, 1 part by mass of a potassium siliconate containing 3% by mass of potassium hydroxide. After being cooled to 100°C or lower, the kneaded product was then neutralized with 2-chloroethanol, followed by removing low-boiling-point fractions to obtain the silicone oil compound (A).

[Comparative examples 1 to 4]

A silicone oil compound (A) was obtained by performing similar steps as those in the working examples 1 to 8, except that there was not performed the step of promoting the dispersion of the component (b) into the component (a) by a kneading machine before the heating treatment, which is a step with a purpose of adjusting the median particle size of the organopolysiloxane-silica crosslinked product.

[Working examples 1 and 3 to 8; comparative examples 1 and 3 to 4]

Preparation of self-emulsifying-type defoaming agent composition

At the compounding ratios shown in Table 1, the polyoxyalkylene-modified organopolysiloxane (B) was added to the silicone oil compound (A) obtained as above, and the polyoxyalkylene polymer (D) was further added thereto in the case of the working example 7, where a homomixer was used to mix them at room temperature in these examples to obtain a self-emulsifying-type defoaming agent composition.

[Working example 2, comparative example 2]

Preparation of emulsion-type defoaming agent composition

At the compounding ratios shown in Table 1, the polyoxyalkylene-modified organopolysiloxane (B) and the surfactant (C) were added to the silicone oil compound (A) obtained as above, where a homomixer was used to mix and emulsify them at room temperature by adding water (E), thereby obtaining an emulsion-type defoaming agent composition.

The performances of the organopolysiloxane-silica crosslinked products (silicone oil compounds) or defoaming agent compositions obtained in the working examples 1 to 8 and comparative examples 1 to 4 were evaluated by the following methods. The results are shown in Table 1.

[Median particle size]

Particle size distribution measurement of the organopolysiloxane-silica crosslinked product via single particle optical sizing (SPOS method) was performed as follows.

Particle size distribution measurement was performed using a device shown below, and a dispersion that was prepared by adding 99.95 g of a solvent (toluene) to 0.050 mg of a sample (silicone oil compound for defoaming agent) and was in such a state where the sample was sufficiently dissolved and dispersed therein. A median particle size was calculated from the particle size distribution obtained.

[Particle size distribution measurement device/condition]

·Device: Accusizer SIS (by Particle Sizing Systems)
·Measurement principle: Single Particle Optical Sizing: SPOS method (light scattering/light blocking)

·Measurement range: 0.5 to 400 μm
· Sample amount × measurement frequency: 20 mL × 3 times (collection time: 120 sec)
·Measurement temperature: room temperature

[Emulsion stability]

Based on the criteria shown below, visual observations were made on the appearance of the emulsion-type defoaming agent composition from immediately after its preparation by the above method until after it had been left to stand still at room temperature for a day. Further, as for the self-emulsifying-type defoaming agent composition, 70 g of pure water was mixed with 30 g of the self-emulsifying-type defoaming agent composition to cause emulsification, after which the composition was left to stand still at room temperature for a day, and the appearance thereof was then visually observed based on the following criteria.

○: Occurrence of separation, oil float and aggregated substances was not observed.
Δ: Occurrence of separation, oil float and aggregated substances was observed slightly.
×: Occurrence of separation, oil float and aggregated substances was observed to a large degree.

[Defoaming property (initial)]

Here, 0.1% by mass of each defoaming agent composition in terms of active ingredient amount (amount of ingredient other than water) was added to a commercially available water-soluble cutting oil (YUSHIROKEN FGE234 by YUSHIRO CHEMICAL INDUSTRY CO.,LTD.), followed by diluting them 10-fold with water, and then stirring them in a 500 mL beaker by a homomixer at 5,000 rpm for 1 min, where measured was a time from when stirring was stopped until when bubbles had completely disappeared. This was repeated three times, whereby a sustained defoaming property was able to be evaluated based on changes in, likewise, time until bubbles had disappeared.

[Internal addition stability]

Here, 0.1% by mass of each defoaming agent composition in terms of active ingredient amount (amount of ingredient other than water) was added to the commercially available water-soluble cutting oil, after which this cutting oil was stored at 50°C for 7 days and then had its appearance visually observed based on the following criteria.

◎: Occurrence of floating substances and precipitates was not observed at all.
○: Occurrence of floating substances and precipitates was observed slightly.
Δ: Occurrence of floating substances and precipitates was observed to a medium degree.
×: Occurrence of floating substances and precipitates was observed to a large degree.

[Defoaming property (after aging)]

The aged water-soluble cutting oil that was used in the internal addition stability test was diluted 10-fold with water, and then stirred in a 500 mL beaker by a homomixer at 5,000 rpm for 1 min, where measured was a time from when stirring was stopped until when bubbles had completely disappeared.

[Table 1]

| | | | Working example 1 | Working example 2 | Working example 3 | Working example 4 | Working example 5 | Working example 6 | Working example 7 | Working example 8 | Comparative example 1 | Comparative example 2 | Comparative example 3 | Comparative example 4 |
|---|---|---|---|---|---|---|---|---|---|---|---|---|---|---|
| (A) Silicone oil compound | (a) Organopolysiloxane | (a-1) | 27.3 | 8.2 | 26 | | | 27.3 | 27.3 | 27 | 24.3 | 7.3 | 24.5 | 28.5 |
| | | (a-2) | | | | 27.3 | | | | | | | | |
| | | (a-3) | | | | | 27.3 | | | | | | | |
| | (b) Fine powder silica | (b-1) | 1.5 | 0.45 | 1.5 | | | 1.5 | 1.5 | 3 | 4.5 | 1.35 | 1.5 | 0.5 |
| | | (b-2) | | | | 1.5 | 1.5 | | | | | | | |
| | (c) Organopolysiloxane resin [as solid content] | (c-1) | 1.2 | 0.35 | 2.5 | 1.2 | | | 1.2 | | 1.2 | 0.35 | | 1 |
| | | (c-2) | | | | | 1.2 | | | | | | | |
| | | (c-3) | | | | | | 1.2 | | | | | 4 | |
| (B) Polyoxyalkylene-modified organopolysiloxane | | (B-1) | 70 | 21 | 70 | | | 70 | 55 | 70 | 70 | 21 | 70 | 70 |
| | | (B-2) | | | | 70 | 70 | | | | | | | |
| (C) Surfactant | | (C-1) | | 0.4 | | | | | | | | 0.4 | | |
| | | (C-2) | | 2 | | | | | | | | 2 | | |
| (D) Polyoxyalkylene polymer | | | | | | | | | 15 | | | | | |
| (E) Water | | | | 67.6 | | | | | | | | 67.6 | | |
| Device used in step of dispersing (a)+(b) | | | Homomixer | Homomixer | Kneader | Homomixer | Homomixer | Homomixer | Homomixer | Kneader | None | None | None | None |
| Median particle size [$\mu$m] * | | | 12.4 | 11.8 | 15.1 | 18.3 | 20.1 | 13.2 | 9.71 | 8.97 | 36.5 | 30.4 | 37.3 | 1.96 |
| Emulsion stability | | | ○ | ○ | ○ | ○ | ○ | ○ | ○ | ○ | × | △ | × | ○ |
| Defoaming property (initial) | First time | | 2'38 | 2'45 | 1'27 | 2'11 | 3'15 | 3'31 | 3'03 | 3'44 | - | 7'04 | - | > 10'00 |
| | Second time | | 2'51 | 3'10 | 1'33 | 2'32 | 3'10 | 3' 52 | 3'18 | 4'21 | - | >10'00 | - | - |
| | Third time | | 2'55 | 3'13 | 1'40 | 2'30 | 3'27 | 3' 56 | 3'45 | 5'22 | - | - | - | - |

16

EP 4 324 539 A1

(continued)

| | Working example 1 | Working example 2 | Working example 3 | Working example 4 | Working example 5 | Working example 6 | Working example 7 | Working example 8 | Comparative example 1 | Comparative example 2 | Comparative example 3 | Comparative example 4 |
|---|---|---|---|---|---|---|---|---|---|---|---|---|
| Internal addition stability | ○ | ◎ | ○ | ○ | ○ | ○ | ◎ | △ | - | × | - | △ |
| Defoaming property (after aging) | 2'47 | 3'27 | 1'32 | 3'10 | 2'46 | 4'31 | 3'24 | 4'45 | - | - | - | - |

*Median particle size of organopolysiloxane-silica crosslinked product on volumetric basis that is measured by SPOS method.

**Claims**

1. A silicone oil compound (A) for a defoaming agent, which is a crosslink-treated product of:

   (a) 100 parts by mass of a hydrophobic organopolysiloxane having a viscosity of 10 to 100,000 $mm^2/s$ at 25°C; and
   (b) 1 to 15 parts by mass of a fine powder silica,

   wherein in a particle size distribution of the organopolysiloxane-silica crosslinked product that is measured by single particle optical sizing (SPOS method) after diluting the oil compound with toluene, a median particle size on volumetric basis is 5 to 25 $\mu$m.

2. The silicone oil compound for a defoaming agent according to claim 1, wherein the silicone oil compound is a crosslink-treated product of:

   the component (a);
   the component (b); and
   (c) 0.1 to 15 parts by mass of an organopolysiloxane resin composed of $R^1R^2R^3SiO_{1/2}$ units and $SiO_{4/2}$ units, where a molar ratio of $R^1R^2R^3SiO_{1/2}$ units to $SiO_{4/2}$ units is 0.4 to 2.0, and each of $R^1$, $R^2$ and $R^3$ independently represents a substituted or unsubstituted monovalent hydrocarbon group having 1 to 18 carbon atoms.

3. The silicone oil compound for a defoaming agent according to claim 1, wherein the silicone oil compound is a crosslink-treated product of:

   the component (a);
   the component (b); and
   (c) 1.0 to 10 parts by mass of an organopolysiloxane resin composed of $R^1R^2R^3SiO_{1/2}$ units and $SiO_{4/2}$ units, where a molar ratio of $R^1R^2R^3SiO_{1/2}$ units to $SiO_{4/2}$ units is 0.6 to 1.0, and each of $R^1$, $R^2$ and $R^3$ independently represents a substituted or unsubstituted monovalent hydrocarbon group having 1 to 18 carbon atoms.

4. The silicone oil compound for a defoaming agent according to claim 1, wherein the silicone oil compound is an alkaline catalyst-treated product.

5. The silicone oil compound for a defoaming agent according to claim 2 or 3, wherein the silicone oil compound is an alkaline catalyst-treated product.

6. A self-emulsifying-type defoaming agent composition comprising:

   (A) the silicone oil compound for a defoaming agent according to any one of claims 1 to 5; and
   (B) a polyoxyalkylene group-modified organopolysiloxane.

7. An emulsion-type defoaming agent composition comprising:

   (A) the silicone oil compound for a defoaming agent according to any one of claims 1 to 5;
   (C) a surfactant; and
   (E) water.

8. A method for producing the silicone oil compound for a defoaming agent according to any one of claims 1 to 5, comprising:

   a step of mixing the component (b) into the component (a); and
   a step of subjecting the mixture of the components (a) and (b) to a cross-linking treatment by heating the mixture,

   wherein in the mixing step, there is provided a dispersing step of dispersing the component (b) into the component (a) to adjust the median particle size of the organopolysiloxane-silica crosslinked product to 5 to 25 $\mu$m.

9. The method for producing the silicone oil compound for a defoaming agent according to claim 8, wherein in the mixing step, the dispersing step is performed by carrying out shearing at a circumferential speed of 2.75 to 15.8 m/s using a disperser.

10. The method for producing the silicone oil compound for a defoaming agent according to claim 8, wherein in the mixing step, the dispersing step is performed using a kneader in such a manner where the component (b) is to be mixed into an amount of the component (a) that accounts for 1/3 to 1/5 of a compounding amount of the component (a), followed by carrying out solid kneading at 15 to 30 rpm, and then mixing thereinto the remaining part of the compounding amount of the component (a) for dilution.

## INTERNATIONAL SEARCH REPORT

| International application No. |
|---|
| **PCT/JP2022/015343** |

**A.    CLASSIFICATION OF SUBJECT MATTER**

*B01D 19/04*(2006.01)i; *C08K 3/36*(2006.01)i; *C08L 83/04*(2006.01)i
FI:    B01D19/04 A; C08K3/36; C08L83/04

According to International Patent Classification (IPC) or to both national classification and IPC

**B.    FIELDS SEARCHED**

Minimum documentation searched (classification system followed by classification symbols)

B01D19/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2011-104525 A (SHIN-ETSU CHEMICAL CO LTD) 02 June 2011 (2011-06-02) | 1-7 |
|  | claims, paragraphs [0012]-[0048], examples 1-4 | |
| A | | 8-10 |
| Y | WO 2016/021427 A1 (SHIN-ETSU CHEMICAL CO LTD) 11 February 2016 (2016-02-11) | 1-7 |
|  | claims, paragraphs [0012]-[0073], examples 1-12 | |
| A | | 8-10 |
| Y | JP 2015-522401 A (WACKER CHEMIE AG) 06 August 2015 (2015-08-06) | 1-7 |
|  | claims, paragraphs [0015]-[0073], examples 1a-2g | |
| A | | 8-10 |
| Y | WO 2019/241498 A1 (W. R. GRACE & CO.-CONN) 19 December 2019 (2019-12-19) | 1-7 |
|  | paragraphs [0021]-[0024] | |
| Y | JP 8-000909 A (DOW CORNING SA) 09 January 1996 (1996-01-09) | 1-7 |
|  | paragraph [0015] | |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 June 2022** | **21 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/015343**

**C.    DOCUMENTS CONSIDERED TO BE RELEVANT**

| Category* | Citation of document, with indication, where appropriate, of the relevant passages | Relevant to claim No. |
|---|---|---|
| Y | JP 7-163805 A (DOW CORNING SA) 27 June 1995 (1995-06-27)<br>    paragraph [0027] | 1-7 |

Form PCT/ISA/210 (second sheet) (January 2015)

**INTERNATIONAL SEARCH REPORT**
Information on patent family members

International application No.

**PCT/JP2022/015343**

| Patent document cited in search report | | | Publication date (day/month/year) | Patent family member(s) | | | Publication date (day/month/year) |
|---|---|---|---|---|---|---|---|
| JP | 2011-104525 | A | 02 June 2011 | EP | 2325262 | A1 | |
| | | | | claims, paragraphs [0015]-[0051], examples 1-4 | | | |
| WO | 2016/021427 | A1 | 11 February 2016 | US | 2017/0209813 | A1 | |
| | | | | claims, paragraphs [0041]-[0142], examples 1-12 | | | |
| | | | | CN | 106659950 | A | |
| | | | | EP | 3178536 | A1 | |
| | | | | JP | 2016-36746 | A | |
| | | | | JP | 2016-52621 | A | |
| JP | 2015-522401 | A | 06 August 2015 | US | 2015/0119509 | A1 | |
| | | | | claims, paragraphs [0017]-[0116], examples 1a-2g | | | |
| | | | | CN | 104284704 | A | |
| | | | | DE | 102012207484 | A1 | |
| | | | | EP | 2846891 | A1 | |
| | | | | KR | 10-2014-0130547 | A | |
| | | | | WO | 2013/167430 | A1 | |
| WO | 2019/241498 | A1 | 19 December 2019 | BR | 112020025486 | A2 | |
| | | | | CN | 112638490 | A | |
| | | | | EP | 3813972 | A1 | |
| | | | | JP | 2021-527734 | A | |
| | | | | KR | 10-2021-0019449 | A | |
| | | | | US | 2021/0316232 | A1 | |
| JP | 8-000909 | A | 09 January 1996 | EP | 687724 | A1 | |
| | | | | p. 3, lines 26-32 | | | |
| | | | | AT | 205248 | T | |
| | | | | AU | 2171895 | A | |
| | | | | BR | 9502831 | A | |
| | | | | CA | 2152017 | A1 | |
| | | | | DE | 69522503 | T2 | |
| | | | | ES | 2160141 | T3 | |
| | | | | FI | 952986 | A | |
| | | | | KR | 10-1996-0000295 | A | |
| JP | 7-163805 | A | 27 June 1995 | US | 5486306 | A | |
| | | | | column 4, lines 27-49 | | | |
| | | | | AU | 4180693 | A | |
| | | | | CA | 2098954 | A1 | |
| | | | | DE | 69329742 | T2 | |
| | | | | EP | 578424 | A2 | |
| | | | | ES | 2152242 | T3 | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5163909 B
- JP 6179479 B
- JP 6197768 B

- JP 5922305 B
- JP 5346283 B
- JP 2005324140 A